# EUROPÄISCHE PATENTSCHRIFT

(11) **EP 2 738 043 B1**
(45) Veröffentlichungstag und Bekanntmachung des Hinweises auf die Patenterteilung: **22.07.2015**
(21) Anmeldenummer: 12195324.4
(22) Anmeldetag: 03.12.2012
(51) Int. Cl.: B60R 1/07

(54) **Gehäuse und Anzeigeeinrichtung**
Housing and display device
Boîtier et dispositif d'affichage

(43) Veröffentlichungstag der Anmeldung: 04.06.2014
(73) Patentinhaber: SMR Patents S.à.r.l., 1653 Luxembourg (LU)
(72) Erfinder: Wieczorek, Romeo, 73732 Esslingen (DE)
(74) Vertreter: Weber-Bruls, Dorothée

(56) Entgegenhaltungen:
- EP-A1- 1 717 103
- WO-A1-2010/050813
- DE-A1- 10 006 397
- US-A- 6 111 683
- US-A1- 2002 171 906

## Beschreibung

Die Erfindung betrifft ein Gehäuse für eine Anzeigeeinrichtung einer Rückblickeinrichtung eines Kraftfahrzeugsmit den Merkmalen des Oberbegriffs des Anspruchs 1. Darüber hinaus betrifft die Erfindung eine Anzeigeeinrichtung mit einem derartigen Gehäuse, eine Rückblickeinrichtung mit einer derartigen Anzeigeeinrichtung und/oder mit einem derartigen Gehäuse sowie ein Kraftfahrzeug mit einer derartigen Rückblickeinrichtung, einer derartigen Anzeigeeinrichtung und/oder mit einem derartigen Gehäuse.

Gehäuse sowie Anzeigeeinrichtungen mit derartigem Gehäuse sind bekannt. Bei diesen sind in der Vertiefung außer dem Reflexionsmittel auch mindestens ein ein Leuchtmittel umfassender Verbraucher angeordnet, der seinerseits an einer Platine festgelegt ist. Die Platine ist bei den bekannten Gehäusen, beziehungsweise bei den bekannten Anzeigeeinrichtungen, ebenfalls in der Vertiefung des Gehäusekörpers angeordnet. Hierbei hat es sich als nachteilig herausgestellt, dass aufgrund der Mehrteiligkeit der Anzeigeeinrichtung eine Montage der einzelnen Komponenten zeitaufwendig ist. Ferner muß das Gehäuse zur Aufnahme aller Komponenten großzügig dimensioniert werden. Darüber hinaus gestaltet sich eine exakte Ausrichtung, beispielsweise des Leuchtmittels bezüglich des Reflexionsmittels, aufgrund von Fertigungstoleranzen schwierig.

Aus US 6,111,683 A die dem Oberbegriff den Anspruch 1, entspricht ist ein Innenspiegel bekannt, bei dem eine Vielzahl an kabelartigen Leiteinheiten lose in einem Gehäusekörper angeordnet sind.

Aufgabe der Erfindung ist, ein Gehäuse für eine Anzeigeeinrichtung sowie eine Anzeigeeinrichtung mit einem derartigen Gehäuse vorzuschlagen, das/die kompakt baut und bei der die Montage der einzelnen Komponenten erleichtert ist.

Diese Aufgabe wird durch ein eingangs genanntes Gehäuse erfindungsgemäß gelöst durch mindestens eine Leiteinheit, die unmittelbar an einem Leitabschnitt der Gehäusekörpers festlegbar oder festgelegt ist und die durch eine Laser-Direkt-Strukturierung in den Leitabschnitt eingebracht ist.

Dadurch, dass eine Leiteinheit an einem Leitabschnitt des Gehäusekörpers festgelegt ist, kann auf eine, ein separates Bauteil umfassende, Platine verzichtet werden. Hierdurch ist das Gehäuse bauteilreduziert sowie kompakt ausbildbar und die einzelnen Komponenten schnell montierbar.

Der Gehäusekörper kann grundsätzlich ein beliebiges Material umfassen. Es erweist sich jedoch als vorteilhaft, wenn zumindest der Leitabschnitt des Gehäusekörpers einen Kunststoff, insbesondere Polyphthalamid (PPA) umfasst. Solchenfalls kann der Gehäusekörper in Gänze oder lediglich im Bereich des Leitabschnitts aus Kunststoff, insbesondere aus Polyphthalamid, gebildet sein. Der Gehäusekörper kann aus mehreren Komponenten zusammengesetzt sein, wobei zumindest der Leitabschnitt Polyphthalamid umfasst. Ferner kann der Gehäusekörper ein einstückiges Bauteil umfassen, das in Gänze aus Polyphthalamid gebildet ist.

Bei dem Laser-Direkt-Strukturieren wird zunächst der Leitabschnitt des Gehäusekörpers, der solchenfalls vorzugsweise zumindest teilweise aus Polyphthalamid besteht, bearbeitet. Nach der Bearbeitung durch den Laser, umfassen die bearbeiteten Bereiche eine bestimmte Oberflächenstruktur beziehungsweise Oberflächenbeschaffenheit. In einem weiteren Schritt wird zumindest der Leitabschnitt des Gehäusekörpers mit Kupfer beaufschlagt, wobei zumindest die durch den Laser behandelten Bereiche ein Anhaften des Kupfers ermöglichen. Hierdurch bildet der Leitabschnitt des Gehäusekörpers eine platinenähnliche Struktur. Die Leiteinheit wird vorzugsweise durch Kupfer gebildet.

Um das Festlegen eines Verbrauchers, insbesondere mindestens eines Leuchtmittels zu ermöglichen erweist es sich als vorteilhaft, wenn der Gehäusekörper zumindest am Leitabschnitt mindestens eine Verbraucheraufnahme umfasst, in die ein elektrischer Verbraucher einführbar und darin oder daran festlegbar oder festgelegt ist und in elektrischen Kontakt mit der Leiteinheit bringbar ist.

Ferner erweist es sich als vorteilhaft, wenn der Gehäusekörper zumindest am Leitabschnitt des mindestens einen Gehäusekörpers mindestens ein Koppelmittel umfasst, an dem ein elektrisches Kabel der Anzelgeeinrichtung und/oder der Rückblickeinrichtung festlegbar und/oder mit der Leiteinheit verbindbar ist.

Hierdurch ist der Leitabschnitt des Gehäusekörpers auf einfache Weise mit einem elektrischen Kabel verbindbar.

Grundsätzlich ist es denkbar, dass der Leitabschnitt an einer beliebigen Stelle des Gehäuses angeordnet ist. Es erweist sich jedoch als vorteilhaft, wenn der Leitabschnitt des Gehäusekörpers an einer Seitenwand der Vertiefung angeordnet ist und/oder wenn die Vertiefung mindestens einen Vertiefungsboden aufweist, der mindestens einen Schrägabschnitt umfasst, der bezüglich der den Leitabschnitt umfassenden Seitenwand geneigt ist, insbesondere derart, dass die Tiefe der Vertiefung mit wachsendem Abstand zu der den Leitabschnitt umfassenden Seitenwand abnimmt.

Hierdurch kann der Verbraucher auf einfache Weise bezüglich des Reflexionsmittels ausgerichtet angeordnet werden.

Wenn die Anzeigeeinrichtung ein Reflexionsmittel umfasst, das als separates Bauteil in der Vertiefung die Vertiefung einbringbar und dort anordenbar ist, erweist es sich als vorteilhaft, wenn mindestens ein an mindestens einer Seitenwand und/oder am Vertiefungsboden angeordnetes Abstandsmittel vorgesehen ist. Durch das mindestens eine Abstandsmittel wird die Gefahr eines Verrutschens des Reflexionsmittels reduziert. Es ist denkbar, dass lediglich ein Abstandsmittel vorgesehen ist. Ferner ist es denkbar, dass mehrere Abstandsmittel vorgesehen sind, die sowohl an der Seitenwand, als auch am Vertiefungsboden angeordnet sind.

Um einem Eindringen von Feuchtigkeit und Schmutz vorzubeugen ist bei einer Ausführungsform des erfindungsgemäßen Gehäuses mindestens ein Dichtmittel vorgesehen, das an einer dem Vertiefungsboden abgewandtem Ende des Gehäusekörpers angeordnet ist.

Darüber hinaus ist bei einer Ausführungsform des erfindungsgemäßen Gehäuses vorgesehen, dass der Gehäusekörper mindestens ein Rastmittel umfasst, mit dem das Gehäuse an einem korrespondierenden Aufnahmemittel eine Halteplatte der Rückblickeinrichtung des Kraftfahrzeugs festlegbar, insbesondere einclipsbar ist, und/oder dass der Gehäusekörper eine Halteplatte der Rückblickeinrichtung bildet.

Wenn das Gehäuse ein Rastmittel umfasst, mit dem das Gehäuse an einer Halteplatte der Anzeigevorrichtung festlegbar ist, können für das Gehäuse und die Halteplatte unterschiedliche Materialien, insbesondere Kunststoffe, verwendet werden. Wenn beispielsweise für das Gehäuse, insbesondere dem Gehäusekörper, Polyphthalamid verwendet wird, kann bei dem Material für die Halteplatte auf einen kostengünstigeren Kunststoff zurückgegriffen werden.

Wenn das Gehäuse, beziehungsweise der Gehäusekörper, die Halteplatte bildet, ist die Anzeigeeinrichtung, beziehungsweise die Rückblickeinrichtung, bauteilreduziert.

Ferner wird die Aufgabe gelöst durch eine Anzeigeeinrichtung für eine Rückblickeinrichtung eines Kraftfahrzeugs, mit mindestens einem Reflexionsmittel, mit mindestens einem, ein Leuchtmittel umfassenden Verbraucher und mit mindestens einem Gehäuse, insbesondere mit mindestens einem der vorgenannten Merkmale, das mindestens einen Gehäusekörper und mindestens eine Aufnahme für das Reflexionsmittel und das Leuchtmittel und dem Verbraucher bildenden Vertiefung im Gehäusekörper umfasst und die gekennzeichnet ist durch mindestens eine Leiteinheit, durch die elektrische Energie mindestens dem Verbraucher zuführbar ist und die unmittelbar an einem Leitabschnitt des Gehäusekörpers festlegbar oder festgelegt ist.

Die Anzeigeeinrichtung kann beispielsweise eine Totwinkelerfassung oder eine Überholwarnanzeige umfassen.

Das Reflexionsmittel kann grundsätzlich beliebig gebildet sein. Es erweist sich in Weiterbildung letztgenannten Erfindungsgedankens als zweckmäßig, wenn das Reflexionsmittel einen Lichtleitkörper und/oder eine an einem Vertiefungsboden der Vertiefung des Gehäusekörpers angeordnete reflektierende Beschichtung umfasst.

Der Verbraucher kann grundsätzlich einen beliebigen elektrischen Verbraucher umfassen, beispielsweise einen Sensor, ein Laser oder dergleichen. Es erweist sich jedoch als vorteilhaft, wenn der mindestens ein Leuchtmittel umfassende Verbraucher mindestens eine LED umfasst.

Ferner ist es denkbar, dass mehrere Verbraucher vorgesehen sind, die jeweils mindestens eine LED umfassen.

Darüber hinaus wird die Aufgabe gelöst durch eine Rückblickeinrichtung für ein Kraftfahrzeug, mit mindestens einer Reflexionseinheit, mit der ein rückwärtiger Bereich durch einen Fahrzeugfahrer einsehbar ist, mit mindestens einer Halteplatte an der die Reflexionseinheit anordenbar oder angeordnet ist und mit einer Anzeigeeinrichtung, die ein Reflexionsmittel, mindestens einen ein Leuchtmittel umfassenden Verbraucher und mindestens ein Gehäuse umfasst, insbesondere mit mindestens einem der vorhergehenden Merkmale.

Die Rückblickeinrichtung kann beispielsweise einen Fahrzeugaußen- oder Fahrzeuginnenspiegel umfassen.

Bei einer Ausführungsform der erfindungsgemäßen Rückblickeinrichtung erweist es sich als vorteilhaft, wenn der Gehäusekörper die Halteplatte umfasst.

Schließlich wird die Aufgabe gelöst durch ein Kraftfahrzeug, mit mindestens einer Rückblickeinrichtung, insbesondere mit einem der zuvor genannten Merkmale, und/oder mit einer Anzeigeeinrichtung , insbesondere mit einem der zuvor genannten Merkmale, und/oder mit mindestens einem Gehäuse, insbesondere mit einem der zuvor genannten Merkmale.

Das erfindungsgemäße Gehäuse, die erfindungsgemäße Anzeigeeinrichtung, die erfindungsgemäße Rückblickeinrichtung sowie das erfindungsgemäße Kraftfahrzeug erweisen sich in mehrfacher Hinsicht als vorteilhaft:

Dadurch, dass der Gehäusekörper einen Leitabschnitt umfasst, an dem eine Leiteinheit anordenbar ist, kann auf das Vorsehen einer Platine in dem Gehäuse verzichtet werden. Hierdurch ist die Anzeigeeinrichtung beziehungsweise die Rückblickeinrichtung bauteilreduziert und kompakt herstellbar. Ferner können die einzelnen Komponenten, insbesondere der ein Leuchtmittel umfassende Verbraucher bezüglich des Reflexionsmittels einfacher ausgerichtet werden.

Dadurch, dass der Leitabschnitt zusätzlich eine Verbraucheraufnahme und/oder ein Koppelmittel umfasst, kann ein elektrischer Verbraucher beziehungsweise ein elektrisches Kabel, mit dem elektrische Energie der Leiteinheit zuführbar ist, mit der Leiteinheit verbunden werden.

Weitere Merkmale, Einzelheiten sowie Vorteile der Erfindung entnehmen sich aus den beigefügten Patentansprüchen, aus den zeichnerischen Darstellungen und nachfolgender Beschreibung einer bevorzugte Ausführungsform eines erfindungsgemäßen Gehäuses.

In der Zeichnung zeigt:

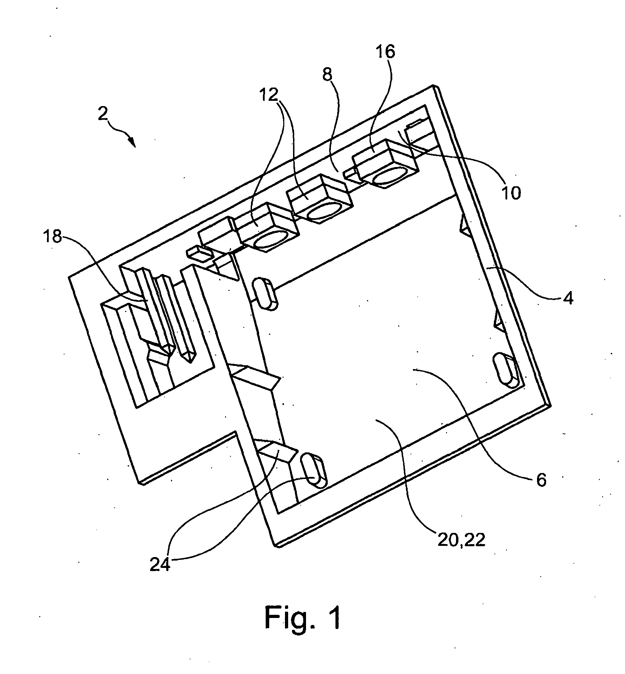

Figur 1 eine perspektivische Draufsicht auf ein erfindungsgemäßes Gehäuse.

Figur 1 zeigt ein insgesamt mit dem Bezugszeichen 2 versehenes Gehäuse für eine Anzeigeeinrichtung einer Rückblickeinrichtung eines Kraftfahrzeugs. Das Gehäuse 2 umfasst einen Gehäusekörper 4, in dem eine Vertiefung 6 vorgesehen ist. Die Vertiefung 6 bildet eine Aufnahme für zumindest ein Reflexionsmittel der Anzeigeeinrichtung (in der Figur 1 nicht dargestellt). Der Gehäusekörper 4 umfasst einen Leitabschnitt 8, an dem eine Leiteinheit 10 angeordnet ist, durch die elektrische Energie Verbrauchern 12 zuführbar ist. Die in Figur 1 dargestellten Verbraucher 12 umfassen jeweils LEDs 14. Um den Verbraucher 12 an dem Leitabschnitt 8 des Gehäusekörpers 4 festzulegen, umfasst der Gehäusekörper 4 an dem Leitabschnitt 8 Verbraucheraufnahmen 16 in die die Verbraucher 12 einführbar und darin festlegbar sind. Darüber hinaus umfasst der Leitabschnitt 8 des Gehäusekörpers 4 Koppelmittel 18, durch die mindestens ein elektrisches Kabel festlegbar und mit der Leiteinheit 10 verbindbar ist.

Bei dem in Figur 1 gezeigten Ausführungsbeispiel umfasst die Vertiefung 6 einen Vertiefungsboden 20, der einen Schrägabschnitt 22 umfasst, der bezüglich des Leitabschnitts 8 geneigt ist. Hierbei ist die Neigung des Schrägabschnitts 22 des Vertiefungsbodens derart, dass die Tiefe der Vertiefung 6 mit wachsendem Abstand zu dem Leitabschnitt 8 abnimmt. Darüber hinaus sind am Vertiefungsboden 20 und an den die Vertiefung 6 seitlich begrenzenden Seitenwänden Abstandsmittel 24 vorgesehen, an denen ein Reflexionsmittel (in Figur 1 nicht dargestellt) abstützbar und bezüglich seiner Anordnung innerhalb der Vertiefung 6 festlegbar ist.

### Bezugszeichen

- 2: Gehäuse
- 4: Gehäusekörper
- 6: Vertiefung
- 8: Leitabschnitt
- 10: Leiteinheit
- 12: Verbraucher
- 14: LED
- 16: Verbraucheraufnahme
- 18: Koppelmittel
- 20: Vertiefungsboden
- 22: Schrägabschnitt
- 24: Abstandsmittel

## Patentansprüche

1. Gehäuse (2) für eine Anzeigeeinrichtung einer Rückblickeinrichtung eines Kraftfahrzeugs, mit mindestens einem Gehäusekörper (4), mit mindestens einer eine Aufnahme bildenden Vertiefung (6) im Gehäusekörper (4), in der mindestens ein Reflexionsmittel der Anzeigeeinrichtung anordenbar oder angeordnet ist, und mit mindestens einer Leiteinheit (10), durch die elektrische Energie mindestens einem Verbraucher (12) der Anzeigeeinrichtung zuführbar ist, **dadurch gekennzeichnet, dass** die mindestens eine Leiteinheit (10) unmittelbar an einem Leitabschnitte (8) des Gehäusekörpers (4) festlegbar oder festgelegt ist und dass die Leiteinheit (10) durch eine Laser-Direkt-Strukturierung in den Leitabschnitt (8) eingebracht ist.

2. Gehäuse (2) nach Anspruch 1, **dadurch gekennzeichnet, dass**
zumindest der Leitabschnitt (8) des Gehäusekörpers (4) einen Kunststoff, insbesondere Polyphthalamid (PPA), umfasst.

3. Gehäuse (2) nach Anspruch 1 oder 2, **dadurch**
**gekennzeichnet, dass**
der Gehäusekörper (4) zumindest am Leitabschnitt (8) mindestens eine Verbraucheraufnahme (16) umfasst, in die ein elektrischer Verbraucher (12) einführbar und darin oder daran festlegbar oder festgelegt ist und in elektrischen Kontakt mit der Leiteinheit (10) bringbar ist.

4. Gehäuse (2) nach mindestens einem der vorhergehenden Ansprüche, **dadurch**
**gekennzeichnet, dass**
der Gehäusekörper (4) zumindest am Leitabschnitt (8) des mindestens Gehäusekörpers (4) mindestens ein Koppelmittel (18) umfasst, an dem ein elektrisches Kabel der Anzeigeeinrichtung und/oder der Rückblickeinrichtung festlegbar und/oder mit der Leiteinheit (10) verbindbar ist.

5. Gehäuse (2) nach mindestens einem der vorhergehenden Ansprüche, **dadurch gekennzeichnet, dass** der Leitabschnitt (8) des Gehäusekörpers (4) an einer Seitenwand der Vertiefung (6) angeordnet ist und/oder das die Vertiefung (6) mindestens einen Vertiefungsboden (20) aufweist, der mindestens einen Schrägabschnitt (22) umfasst, der bezüglich der den Leitabschnitt (8) umfassenden Seitenwand geneigt ist, insbesondere derart, dass die Tiefe der Vertiefung (6) mit wachsendem Abstand zu der den Leitabschnitt (8) umfassenden Seitenwand abnimmt.

6. Gehäuse (2) nach mindestens einem der vorhergehenden Ansprüche, **gekennzeichnet durch** mindestens ein an mindestens einer Seitenwand und/oder am Vertiefungsboden (20) angeordnetem Abstandsmittel (24).

7. Gehäuse (2) nach mindestens einem der vorhergehenden Ansprüche, **gekennzeichnet durch** mindestens ein Dichtmittel, das an einer dem Vertiefungsboden (20) abgewandten Ende des Gehäusekörpers (4) angeordnet ist.

8. Gehäuse (2) nach mindestens einem der vorhergehenden Ansprüche, **dadurch gekennzeichnet, dass** der Gehäusekörper (4) mindestens ein Rastmittel umfasst, mit dem das Gehäuse (2) an einem korrespondierenden Aufnahmemittel eine Halteplatte der Rückblickeinrichtung des Kraftfahrzeugs festlegbar, insbesondere einclipsbar ist, und/oder das der Gehäusekörper (4) eine Halteplatte der Rückblickeinrichtung bildet.

9. Anzeigeeinrichtung für eine Rückblickeinrichtung eines Kraftfahrzeugs, mit mindestens einem Reflexionsmittel, mit mindestens einem, ein Leuchtmittel umfassenden Verbraucher (12) und mit mindestens einem Gehäuse (2)), nach einem der Ansprüche 1 bis 8, das mindestens einen Gehäusekörper (4) und mindestens eine eine Aufnahme für das Reflexionsmittel und das Leuchtmittel und den Verbraucher (12) bildende Vertiefung (6) im Gehäusekörper (4) aufweist, **gekennzeichnet durch** mindestens eine Leiteinheit (10), **durch** die elektrische Energie mindestens dem Verbraucher (12) zuführbar ist und die unmittelbar an einem Leitabschnitt (8) des Gehäusekörpers (4) festlegbar oder festgelegt ist.

10. Anzeigeeinrichtung nach Anspruch 9, **dadurch gekennzeichnet, dass** das Reflexionsmittel einen Lichtleitkörper und/oder eine an einem Vertiefungsboden (20) der Vertiefung (6) des Gehäusekörpers (4) angeordnete reflektierende Beschichtung umfasst.

11. Anzeigeeinrichtung nach Anspruch 9 oder 10, **dadurch gekennzeichnet, dass** der mindestens ein Leuchtmittel umfassende Verbraucher (12) mindestens eine LED (14) umfasst.

12. Rückblickeinrichtung für ein Kraftfahrzeug, mit mindestens einer Reflexionseinheit, mit der ein rückwärtiger Bereich durch einen Fahrzeugfahrer einsehbar ist, mit mindestens einer Halteplatte an der die Reflexionseinheit anordenbar oder angeordnet ist und mit einer Anzeigeeinrichtung, die ein Reflexionsmittel, mindestens ein Leuchtmittel umfassenden Verbraucher (12) und mindestens ein Gehäuse (2), nach einem der Ansprüche 1 bis 8, umfasst.

13. Rückblickeinrichtung nach Anspruch 12, **dadurch gekennzeichnet, dass** der Gehäusekörper (4) die Halteplatte umfasst.

14. Kraftfahrzeug, mit mindestens einer Rückblickeinrichtung, insbesondere nach Anspruch 12 oder 13, und/oder mit einer Anzeigeeinrichtung insbesondere nach einem der Ansprüche 9 bis 11, und/oder mit mindestens einem Gehäuse (2), nach mindestens einem der Ansprüche 1 bis 8.

## Claims

1. A housing (2) for a display device of a rear-view device of a motor vehicle, having at least one housing body (4), having at least one recess (6) in the housing body (4), which recess forms a receptacle in which at least one reflecting means of the display device can be arranged or is arranged, and having at least one conducting unit (10) through which electric energy can be supplied to at least one load (12) of the display device, **characterized in that** the at least one conducting unit (10) can be fixed or is fixed directly to a conducting portion (8) of the housing body (4) and that the conducting unit (10) is incorporated into the conducting portion (8) by laser direct structuring.

2. The housing (2) according to Claim 1, **characterized in that** at least the conducting portion (8) of the housing body (4) comprises a plastic material, in particular polyphthalamide (PPA).

3. The housing (2) according to Claim 1 or 2, **characterized in that** the housing body (4), at least on the conducting portion (8), comprises at least one load receptacle (16) into which an electric load (12) can be inserted and can be fixed or is fixed therein or thereon and can be electrically contacted with the conducting unit (10).

4. The housing (2) according to at least one of the preceding claims, **characterized in that** the housing body (4), at least on the conducting portion (8) of the at least one housing body (4), comprises at least one coupling means (18) to which an electric cable of the display device and/or of the rear-view device can be fixed and/or can be connected to the conducting unit (10).

5. The housing (2) according to at least one of the preceding claims, **characterized in that** the conducting portion (8) of the housing body (4) is arranged on a side wall of the recess (6) and/or that the recess (6) has at least one recess bottom (20) comprising at least one inclined portion (22) which is inclined relative to the side wall comprising the conducting portion (8), in particular in such a manner that the depth of the recess (6) decreases as the distance from the side wall comprising the conducting portion (8) increases.

6. The housing (2) according to at least one of the preceding claims, **characterized by** at least one spacing means (24) which is arranged on at least one side wall and/or on the recess bottom (20).

7. The housing (2) according to at least one of the preceding claims, **characterized by** at least one sealing means which is arranged at an end of the housing body (4) facing away from the recess bottom (20).

8. The housing (2) according to at least one of the preceding claims, **characterized in that** the housing body (4) comprises at least one latching means by means of which the housing (2) can be fixed to, especially clipped onto, a corresponding receiving means of a retaining plate of the rear-view device of the motor vehicle and/or that the housing body (4) forms a retaining plate of the rear-view device.

9. A display device for a rear-view device of a motor vehicle, having at least one reflecting means, having at least one load (12) comprising a lighting means, and having at least one housing (2) according to any one of Claims 1 to 8, which housing has at least one housing body (4) and at least one recess (6) in the housing body (4), which recess forms a receptacle for the reflecting means and the lighting means and the load (12), **characterized by** at least one conducting unit (10) through which electric energy can be supplied at least to the load (12) and which can be fixed or is fixed directly to a conducting portion (8) of the housing body (4).

10. The display device according to Claim 9, **characterized in that** the reflecting means comprises a light-conducting body and/or a reflective coating which is arranged on a recess bottom (20) of the recess (6) of the housing body (4).

11. The display device according to Claim 9 or 10, **characterized in that** the load (12) comprising at least one lighting means comprises at least one LED (14).

12. A rear-view device for a motor vehicle, having at least one reflecting unit by means of which a driver of the vehicle can see a rear area, having at least one retaining plate, on which the reflecting unit can be arranged or is arranged, and having a display device comprising a reflecting means, at least one load (12) comprising lighting means and at least one housing (2) according to any one of Claims 1 to 8.

13. The rear-view device according to Claim 12, **characterized in that** the housing body (4) comprises the retaining plate.

14. A motor vehicle, having at least one rear-view device according to Claim 12 or 13, and/or having a display device, especially according to any one of claims 9 to 11, and/or having at least one housing (2), especially according to at least one of claims 1 to 8.

## Revendications

1. Boîtier (2) pour un dispositif d'affichage d'un dispositif de rétrovision d'un véhicule automobile, avec au moins un corps de boîtier (4) au moins un cavité (6) formant un réceptable dans le corps de boîtier (4), dans lequel au moins un moyen réfléchissant du dispositif d'affichage peut être ou est agencé, et au moins une unité conductrice (10) par l'intermédiaire de laquelle de l'énergie électrique peut être alimentée à au moins un consommateur (12) du dispositif d'affichage, **caractérisé en ce que** la au moins une unité conductrice (10) peut être fixée ou est fixée directement à une partie conductrice (8) du corps de boîtier (4), et **en ce que** l'unité conductrice (10) est disposée par l'intermédiaire d'une structuration directe au laser dans la partie conductrice (8).

2. Boîtier (2) selon la revendication 1, **caractérisé en ce qu'**au moins la partie conductrice (8) du corps de boîtier (4) comprend une matière plastique, en particulier polyphtalamide (PPA).

3. Boîtier (2) selon la revendication 1 ou 2, **caractérisé en ce que** le corps de boîtier (4) comprend au moins un réceptacle de consommateur (16) au moins dans la partie conductrice (8), dans lequel un consommateur électrique (12) peut être inséré, puis peut être fixé ou est fixé, et peut être amené en contact électrique avec l'unité conductrice (10).

4. Boîtier (2) selon l'une quelconque des revendications précédentes, **caractérisé en ce que** le corps de boîtier (4), au moins dans la partie conductrice (8) du au moins un corps de boîtier (4), comprend au moins un moyen de couplage (18) auquel un câble électrique du dispositif d'affichage et/ou le dispositif de rétrovision peut être fixé, et/ou peut être relié à l'unité conductrice (10).

5. Boîtier (2) selon l'une quelconque des revendications précédentes, **caractérisé en ce que** la partie conductrice (8) du corps de boîtier (4) est agencée sur une paroi latérale du cavité (6), et/ou **en ce que** le cavité (6) comporte au moins un fond de cavité (20) qui présente au moins une partie inclinée (22), qui est inclinée par rapport à la paroi latérale comprenant la partie conductrice (8), en particulier **en ce que** la profondeur de le cavité (6) diminue en s'éloignant de la paroi latérale comprenant la partie conductrice (8).

6. Boîtier (2) selon l'une quelconque des revendications précédentes, **caractérisé par** au moins un moyen d'espacement (24) agencé sur au moins une paroi latérale et/ou sur le fond de cavité (20).

7. Boîtier (2) selon l'une quelconque des revendications précédentes, **caractérisé par** au moins un moyen d'étanchéité, qui est agencé à une extrémité du corps de boîtier (4) opposée au fond de cavité (20).

8. Boîtier (2) selon l'une quelconque des revendications précédentes, **caractérisé en ce que** le corps de boîtier (4) comprend au moins un moyen de verrouillage à l'aide duquel le boîtier (2), sur un moyen de réception correspondant, peut être fixée une plaque de retenue du dispositif de rétrovision du véhicule automobile, en particulier peut être clipsée, et/ou **en ce que** le corps de boîtier (4) forme une plaque de retenue du dispositif de rétrovision.

9. Dispositif d'affichage pour un dispositif de rétrovision d'un véhicule automobile, avec au moins un moyen de réflexion, au moins un consommateur (12) comprenant un moyen d'éclairage et au moins un boîtier (2) selon l'une quelconque des revendications 1 à 8, comprenant au moins un corps de boîtier (4), et au moins un réceptacle prévu pour le moyen de réflexion et le moyen d'éclairage, le consommateur (12) formant par un cavité (6) dans le corps de boîtier (4), **caractérisé par** au moins une unité conductrice (10) par l'intermédiaire de laquelle l'énergie électrique alimentée au moins au consommateur (12), et qui peut être fixée ou qui est fixée directement sur une partie conductrice (8) du corps de boîtier (4).

10. Dispositif d'affichage selon la revendication 9, **caractérisé en ce que** le moyen de réflexion comporte un corps de guidage de lumière et/ou un revêtement réfléchissant agencé sur un fond de cavité (20) du cavité (6) du corps de boîtier (4).

11. Dispositif d'affichage selon la revendication 9 ou 10, **caractérisé en ce que** le au moins un consommateur (12) comprenant un moyen d'éclairage comprend au moins une LED (14).

12. Système de rétrovision pour véhicule automobile, avec au moins une unité de réflexion à l'aide de laquelle une zone arrière peut être visualisée par un conducteur de véhicule, au moins une plaque de support sur laquelle l'unité de réflexion peut être agencée ou est agencée, et un dispositif d'affichage, comprenant un moyen de réflexion, au moins un consommateur (12) comprenant un moyen d'éclairage et au moins un boîtier (2) selon l'une quelconque des revendications 1 à 8.

13. Dispositif de rétrovision selon la revendication 12, **caractérisé en ce que** le corps de boîtier (4) comprend la plaque de retenue.

14. Véhicule automobile, avec au moins un dispositif rétrovision selon la revendication 12 ou 13, et/ou un dispositif d'affichage, en particulier selon l'une des revendications 9 à 11, et/ou au moins un boîtier (2), en particuliers selon l'une quelconque des revendications 1 à 8.
